# FASCICULE DE BREVET EUROPEEN

(11) **EP 3 482 050 B1**
(45) Date de publication et mention de la délivrance du brevet: **28.10.2020**
(21) Numéro de dépôt: 17743375.2
(22) Date de dépôt: 26.06.2017
(51) Int. Cl.: F01D 11/00, B29B 11/16, D03D 11/00, D03D 13/00, D03D 25/00

(54) **PLATEFORME RAPPORTÉE POUR SOUFFLANTE DE TURBOMACHINE ET PROCÉDÉ POUR LA FABRIQUER**
PLATTFORM MIT ANSATZSTÜCK FÜR EINEN TRIEBWERKSFAN UND HERSTELLUNGSVERFAHREN DAFÜR
PLATFORM WITH EXTENSION PIECE FOR A TURBOMACHINE FAN AND METHOD FOR PRODUCING THE SAME

(30) Priorité: 05.07.2016 US 201615201979
(43) Date de publication de la demande: 15.05.2019
(73) Titulaire: Safran Aircraft Engines, 75015 Paris (FR)
(72) Inventeur: GUIVARC'H, Jérémy, 77550 Moissy-Cramayel (FR); CHARLEUX, François, 77550 Moissy-Cramayel (FR)
(74) Mandataire: Cabinet Beau de Loménie
(86) Numéro de dépôt international: PCT/FR2017/051700
(87) Numéro de publication internationale: WO 2018/007717

(56) Documents cités:
- EP-A1- 2 540 479
- EP-A2- 2 458 153
- FR-A1- 3 011 253
- JP-A- H06 137 103
- US-A1- 2004 175 553
- US-A1- 2012 055 609
- US-A1- 2012 258 641
- US-A1- 2015 167 209
- US-A1- 2016 160 663

## Description

### Arrière-plan de l'invention

La présente invention se rapporte au domaine général des turbomachines aéronautiques, et concerne plus particulièrement une plateforme rapportée pour soufflante de turbomachine.

La soufflante d'une turbomachine aéronautique comprend généralement une pluralité d'aubes mobiles entre lesquelles sont présentes, au niveau de leur pied, des plateformes. Les plateformes ont pour fonction principale de délimiter la veine d'écoulement du flux gazeux entrant dans la turbomachine. De par leur fonction aérodynamique, les parois de veine des plateformes doivent être en contact intime avec les aubes voisines pour assurer une étanchéité entre les plateformes et les aubes. Lors de l'ingestion d'objets (blocs de glace, oiseaux, etc.), les aubes de la soufflante peuvent être impactées et se déformer. Les déformations sont ensuite transmises aux parois de veine des plateformes qui doivent autant que possible ne pas s'abîmer ou se rompre, même en cas d'impact est important.

Pour éviter un endommagement des aubes et des plateformes, le contact entre les aubes et les parois supérieures des plateformes doit être adapté. Pour ce faire, il est connu d'amincir les bords de la paroi supérieure de plateformes qui sont destinés à être au contact des aubes, c'est-à-dire d'en réduire l'épaisseur localement au niveau des zones de contact aube/plateforme. Ces bords amincis permettent d'obtenir un contact plus souple entre les plateformes et les aubes, et d'amortir efficacement les chocs pour réduire les dégâts occasionnés sur les aubes et les plateformes.

Lorsque les plateformes sont en matériau composite réalisé à partir d'un renfort fibreux densifié par une matrice, tel que connu par exemple du document US2016/0160663 A1, l'amincissement des bords de la paroi de veine nécessite généralement une étape d'usinage. En particulier, avec des bords amincis, il est souvent nécessaire de mettre en place des joints pour réaliser l'étanchéité entre les aubes et les plateformes. L'étape d'usinage, délicate, allonge les procédés de fabrication et de montage des plateformes, et en augmente les coûts.

Il existe donc un besoin pour une plateforme rapportée d'aube de soufflante qui soit de fabrication facile et peu coûteuse, et qui ne présente pas les inconvénients précités.

### Objet et résumé de l'invention

La présente invention a donc pour but principal de pallier de tels inconvénients en proposant une plateforme rapportée destinée à être positionnée entre deux aubes voisines d'une soufflante de turbomachine aéronautique, ladite plateforme comprenant une paroi de veine en matériau composite comportant une portion centrale, et un premier et un deuxième bord s'étendant dans une direction longitudinale de ladite paroi, chaque bord s'étendant sur une distance déterminée depuis la portion centrale dans une direction transversale de ladite paroi, ladite paroi de veine comprenant un renfort fibreux densifié par une matrice, caractérisée en ce que le renfort fibreux présent dans la portion centrale présente un tissage tridimensionnel, et en ce que le renfort fibreux présent dans chacun des premier et deuxième bords comprend au moins une première bande de tissu dans une première portion présentant un tissage bidimensionnel, une deuxième bande de tissu dans une deuxième portion présentant un tissage bidimensionnel et une troisième bande de tissu dans une troisième portion présentant un tissage tridimensionnel, lesdites bandes étant toutes reliées au renfort fibreux de la portion centrale par tissage.

Par « tissage bidimensionnel » ou « tissage 2D », on entend ici un mode de tissage classique par lequel chaque fil de chaîne passe d'un côté à l'autre de fils d'une seule couche de trame. Par « tissage tridimensionnel » ou « tissage 3D », on entend ici un mode de tissage par lequel certains au moins des fils de chaîne lient des fils de trame sur plusieurs couches de trame.

Les bords de la paroi de veine de la plateforme selon l'invention permettent d'assurer un contact souple entre la plateforme et les aubes voisines, sans nécessiter d'usinage supplémentaire, et peuvent permettre d'éviter l'ajout de joint. En effet, à épaisseur constante, un matériau composite présentant un renfort fibreux obtenu par tissage tridimensionnel a besoin de plus d'énergie pour se délaminer qu'un matériau composite présentant un renfort fibreux obtenu par tissage bidimensionnel. Il est ainsi possible d'augmenter la souplesse du matériau composite au niveau des bords en prévoyant, dès le tissage du renfort fibreux, une armure différente entre les bords (au moins en partie tissés 2D) et la portion centrale de la paroi de veine (tissée 3D). Il n'est alors plus nécessaire d'usiner les bords pour obtenir une plateforme pouvant supporter les collisions avec les aubes voisines lors d'impacts avec des objets.

L'armure de tissage des premier et deuxième bords peut être choisie parmi : toile, satin, sergé.

Chaque bord peut s'étendre dans la direction transversale de la paroi de veine depuis la portion centrale sur une distance déterminée D telle qu'un rapport D/L est compris entre 2% et 10%, par exemple entre 5% et 10%, où L est la largeur de la paroi de veine dans la direction transversale de ladite paroi.

Chaque bord peut présenter une épaisseur e telle qu'un rapport e/D est compris entre 5% et 50%, par exemple entre 5% et 10%, où D est la distance déterminée sur laquelle chaque bord s'étend dans la direction transversale de la paroi de veine depuis la portion centrale.

Dans une mode de réalisation, la plateforme peut comprendre une paroi de fond destinée à reposer sur un disque de soufflante et deux parois latérales s'étendant entre la paroi de fond et la paroi de veine de ladite plateforme. Dans cette configuration, la plateforme est couramment appelée plateforme « à caisson ».

Dans une mode de réalisation, la plateforme peut être en matériau composite et comprendre un renfort fibreux densifié par une matrice, le renfort fibreux de la paroi de veine constituant une partie du renfort fibreux de la plateforme.

L'invention vise également un module de soufflante de turbomachine aéronautique comprenant au moins deux aubes et au moins une plateforme telle que celle présentée plus haut positionnée entre deux aubes voisines, et vise aussi une turbomachine comprenant un tel module de soufflante. Par module de soufflante on entend, de façon connue en soi, le module de la turbomachine qui comprend notamment la soufflante et, le cas échéant, le compresseur basse pression.

Enfin, l'invention vise encore un procédé de fabrication d'une plateforme rapportée telle que celle présentée plus haut, le procédé comprenant les étapes suivantes :
- le tissage d'une préforme fibreuse destinée à former le renfort fibreux de la paroi de veine de la plateforme, et
- la formation d'une matrice dans la porosité de ladite préforme fibreuse.

### Brève description des dessins

D'autres caractéristiques et avantages de la présente invention ressortiront de la description faite ci-dessous, en référence aux dessins annexés qui en illustrent des exemples et modes de réalisation dépourvus de tout caractère limitatif. Sur les figures :
- la figure 1 montre une plateforme rapportée pour soufflante de turbomachine du type à caisson,
- la figure 2 est une vue schématique en coupe transversale de la plateforme rapportée de la figure 1, et
- les figures 3A et 3B, et 4A et 4B, illustrent deux exemples et deux modes de réalisation d'armures de tissage au niveau d'un bord de la paroi de veine.

### Description détaillée de l'invention

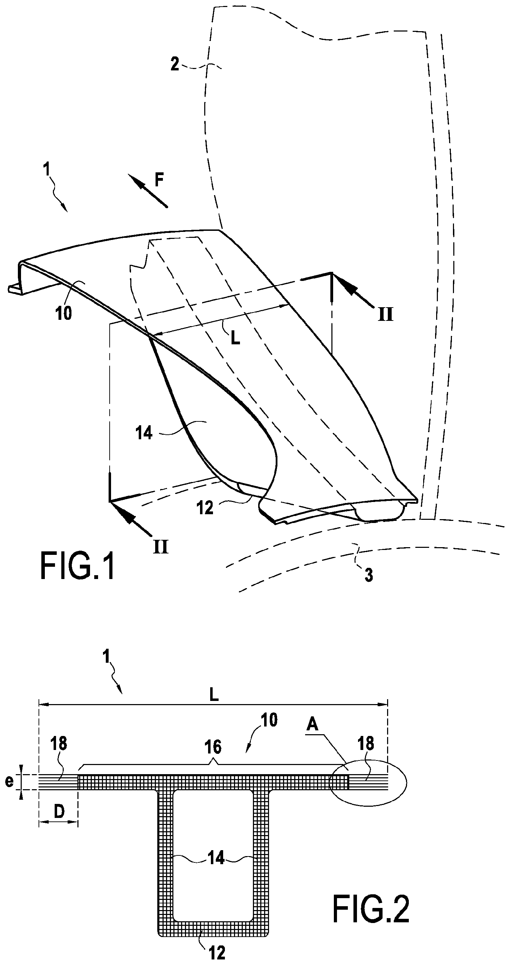

La figure 1 montre un exemple de plateforme rapportée 1 de soufflante de turbomachine aéronautique. La plateforme 1 est positionnée entre deux aubes 2 voisines (seule une aube 2 est représentée schématiquement en pointillés sur la figure 1) et montée sur un disque 3 de soufflante. La plateforme 1 illustrée sur la figure 1 est une plateforme entièrement en matériau composite et du type à caisson, c'est-à-dire présentant une paroi de veine 10, une paroi de fond 12 et deux parois latérales 14 qui s'étendent entre la paroi de fond 12 et la paroi de veine 10. La paroi de fond 12 de la plateforme est, lorsque le moteur est à l'arrêt, au contact du disque de soufflante 3. La direction du flux d'air entrant dans la turbomachine est indiquée sur la figure par la flèche F. Lorsque le moteur est en fonctionnement, la paroi de veine 10 de la plateforme délimite à l'intérieur (par rapport à l'axe longitudinal de la turbomachine, non représenté) la veine d'écoulement du flux gazeux entrant dans la turbomachine.

La plateforme 1 peut comprendre en tout ou partie un renfort fibreux densifié par une matrice. Le renfort fibreux peut comprendre des fibres de carbone, ou des fibres céramiques. La matrice peut quant à elle être une matrice céramique ou, le plus souvent, organique, et obtenue par exemple à partir d'une résine de densification.

La figure 2 montre une vue schématique d'une coupe de la plateforme 1 de la figure 1. La paroi de veine 10 de la plateforme 1 comprend une portion centrale 16 et deux bords 18. Les bords 18 s'étendent dans la direction longitudinale de la paroi de veine 10, ici sur toute la longueur de la paroi de veine 10. La direction longitudinale de la paroi de veine 10 s'entend de la direction donnée par sa plus grande dimension, la direction transversale étant perpendiculaire à la direction longitudinale. La paroi de veine 10 s'étend ici transversalement entre ses deux bords 18.

Conformément à l'invention, la paroi de veine 10 comprend un renfort fibreux densifié par une matrice. Le renfort fibreux présente, dans une partie correspondant à la portion centrale 16, un tissage tridimensionnel. Les parties du renfort fibreux correspondant aux bords 18 de la paroi de veine 10 présentent quant à elles au moins en partie un tissage bidimensionnel. Le renfort fibreux peut par exemple présenter dans la portion centrale 16 une armure du type interlock ou multi couches, et dans les bords une armure du type satin, toile ou sergé. Conformément à l'invention, il convient de prévoir un tissage mixte dans le renfort fibreux des bords 18, c'est-à-dire bidimensionnel sur une partie de l'épaisseur du bord 18, et tridimensionnel sur une autre partie de l'épaisseur du bord 18.

Chacun des bords 18 peut s'étendre dans la direction transversale de la paroi de veine 18 depuis la portion centrale 16 sur une distance déterminée D. La distance D en un point de la paroi de veine 10 peut être telle que D/L est compris entre 2% et 10%, par exemple entre 5% et 10%, où L est la largeur de la paroi de veine au point considéré. Bien entendu, comme pour la plateforme 1 de la figure 1, la largeur L peut varier le long de la paroi de veine 10, de sorte que la distance D peut également être variable le long de la paroi de veine 10. L'épaisseur e d'un bord 18 peut être différente de l'épaisseur du reste de la paroi de veine 10. Dans ce cas, l'épaisseur e d'un bord 18 peut être telle que e/D est compris entre 5% et 50%, par exemple entre 5% et 10%.

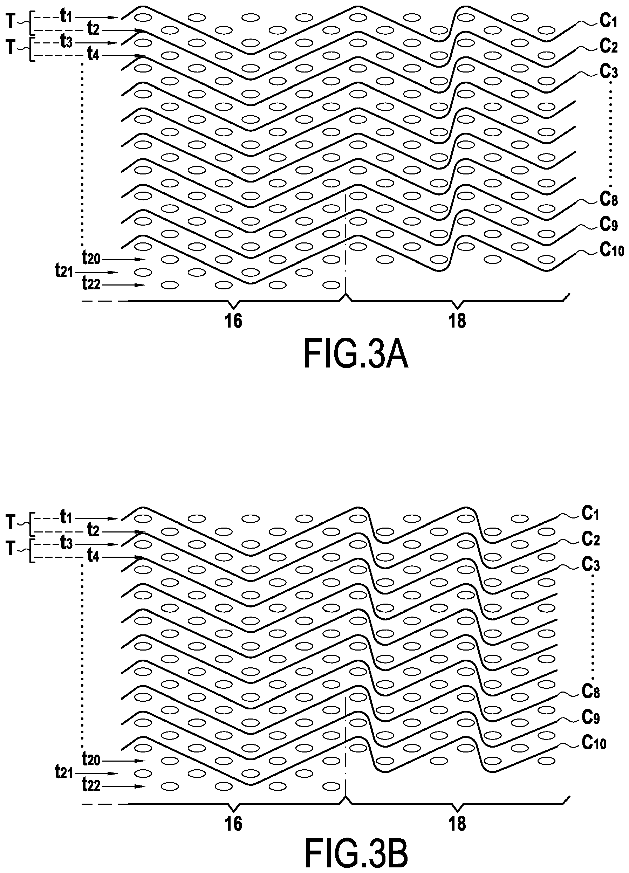

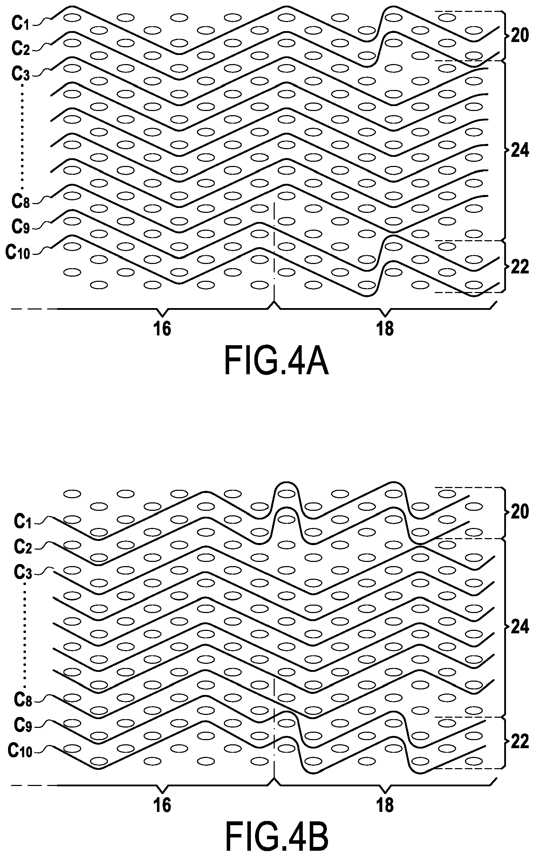

Des exemples et modes de réalisation d'armures de tissage dans la zone A des bords 18 repérée sur la figure 2 vont être décrits respectivement en lien avec les figures 3A et 3B, et 4A et 4B. Sur ces figures, les fils de trame sont visibles en coupe et représentés en quinconce, de sorte qu'une couche de fil de trame T comprend deux demi-couches de fils de trame consécutives t₁ et t₂, t₃ et t₄, etc. Les fils de chaîne sont référencés c₁ à c₁₀. Dans tout le texte et sur tous les dessins, il est mentionné et représenté, par convention et souci de commodité, que ce sont les fils de chaîne qui sont déviés de leur trajet pour saisir des fils de trame d'une couche de trame ou de plusieurs couches de trame. Toutefois, une inversion des rôles entre chaîne et trame est possible.

Les figures 3A et 3B montrent respectivement deux plans d'armure de tissage du renfort fibreux dans la zone A à proximité d'un bord 18, selon un premier exemple. Dans cet exemple, le renfort fibreux de toute la portion centrale 16 présente une armure de tissage tridimensionnel du type interlock, et celui des bords 18 présente une armure de tissage bidimensionnel du type sergé. On a représenté onze couches de fils de trame T du renfort fibreux de la portion centrale 16, soit vingt-deux demi-couches de fils de trame t₁ à t₂₂. Le renfort fibreux au niveau du bord 18 comprend dix couches de fils de trame T, soit vingt demi-couches de fils de trame t₁ à t₂₀.

Dans l'exemple illustré, le renfort fibreux présente, au niveau de la portion centrale 16, un tissage à armure interlock dans lequel chaque fil de chaîne c₁ à c₁₀ lie trois demi-couches de fil de trame. Puis, au niveau du bord 18, le renfort fibreux présente un tissage à armure sergé classique où chaque fil de chaîne c₁ à c₁₀ saisit deux fils de trame en passant d'un côté et de l'autre d'une seule couche de fil de trame T. Au niveau des bords 18, les couches de fils de trame T ne sont pas liées les unes aux autres par des fils de chaîne c₁ à c₁₀. Ainsi, on obtient dans les bords 18 une superposition de bandes de tissus bidimensionnels qui sont reliées chacune à la portion centrale 16 par tissage. En cas d'impact induisant des déplacements relatifs des bords 18 de la plateforme 1 contre les aubes 2 voisines, une délamination pourra se produire entre les strates ou bandes de tissus présentant un tissage bidimensionnel, c'est-à-dire que ces bandes de tissus pourront se séparer les unes des autres.

Les figures 4A et 4B montrent respectivement deux plans d'armure de tissage du renfort fibreux dans la zone A à proximité d'un bord 18, selon un deuxième exemple. Dans cet exemple représentant une mode de réalisation de l'invention, le renfort fibreux de toute la portion centrale 16 présente une armure de tissage interlock, et celui des bords 18 présente une armure de tissage mixte avec deux portions 20 et 22 dans l'épaisseur du bord 18 présentant une armure de tissage sergé (bidimensionnelle), et une portion 24 dans l'épaisseur du bord 18 présentant une armure de tissage interlock (tridimensionnelle).

Comme dans le premier exemple, le renfort fibreux présente, au niveau de la portion centrale 16, un tissage à armure interlock dans lequel chaque fil de chaîne c₁ à c₁₀ lie trois demi-couches de fil de trame. Puis, à l'interface entre la portion centrale 16 et le bord 18, les deux premiers c₁ et c₂, et les deux derniers c₉ et c₁₀ fils de chaîne du bord 18 suivent un motif sergé où chaque fil de chaîne vient saisir deux fils de trame, et dans lequel chaque fil de chaîne lie une seule couche de fils de trame T. Les fils de chaînes c₃ à c₈ restants continuent leur trajet sans changer de motif dans le renfort fibreux du bord 18, en liant trois demi-couches de fils de trame entre elles selon une armure interlock. Dans la portion 24 les couches de fils de trame T sont liées entre elles par les fils c₃ à c₈. Dans les bords 18, les deux première et les deux dernières couches de fils de trame T ne sont pas liées entre elles, ni avec celles de la portion 24. En mettant en œuvre l'armure de tissage exemplifiée ici, les bords 18 présentent seulement en partie un tissage bidimensionnel dans les portions 20 et 22. Ainsi, les bords 18 présentent chacun deux bandes de tissus bidimensionnel dans chaque portion 20 et 22 ; et une bande présentant un tissage tridimensionnel dans la portion 24. Les bandes précitées des portions 20, 22 et 24 sont toutes reliées à la portion centrale 16 de la paroi de veine 10 par tissage.

Pour fabriquer une plateforme 1 selon l'invention, on peut tout d'abord obtenir par tissage une préforme fibreuse destinée à former le renfort fibreux de la plateforme. Une plateforme à caisson 1 telle que celle illustrée en figure 1 peut être obtenue à partir d'une unique préforme fibreuse. En variante, on peut utiliser plusieurs préformes fibreuses qui seront ensuite assemblées avant densification, par exemple une préforme fibreuse pour la paroi de veine 10 et une préforme fibreuse pour le reste de la plateforme. La préforme fibreuse de la paroi de veine 10 est tissée en respectant les caractéristiques de tissage décrites précédemment, et en utilisant par exemple les armures décrites précédemment au niveau des bords 18. Bien entendu, d'autres armures de tissage que celles présentées ci-dessus peuvent être utilisées sans sortir du cadre de l'invention.

Enfin, une matrice peut être formée par toute méthode connue à l'intérieur de la préforme fibreuse de la plateforme 1, éventuellement mise en forme. Par exemple, la plateforme 10 peut être fabriquée par moulage par injection de résine dans la préforme fibreuse. Ce procédé est connu en anglais sous l'abréviation RTM pour « Resin Transfer Molding ». Pour cela, on dispose d'un moule d'injection ayant la forme de la plateforme 1 dans lequel on positionne la préforme fibreuse sèche, puis on injecte une résine sous pression à l'intérieur du moule, on solidifie la résine de manière à former une matrice dans la porosité de la préforme fibreuse, et on extrait du moule la plateforme 1 ainsi fabriquée.

## Revendications

1. Plateforme rapportée (1) destinée à être positionnée entre deux aubes (2) voisines d'une soufflante de turbomachine aéronautique, ladite plateforme comprenant une paroi de veine (10) en matériau composite comportant une portion centrale (16), et un premier et un deuxième bord (18) s'étendant dans une direction longitudinale de ladite paroi, chaque bord s'étendant sur une distance déterminée (D) depuis la portion centrale (16) dans une direction transversale de ladite paroi, ladite paroi de veine comprenant un renfort fibreux densifié par une matrice, **caractérisée en ce que** le renfort fibreux présent dans la portion centrale (16) présente un tissage tridimensionnel, et **en ce que** le renfort fibreux présent dans chacun des premier et deuxième bords (18) comprend au moins une première bande de tissu dans une première portion (20) présentant un tissage bidimensionnel, une deuxième bande de tissu dans une deuxième portion (22) présentant un tissage bidimensionnel, et une troisième bande de tissu dans une troisième portion (24) présentant un tissage tridimensionnel, lesdites bandes étant toutes reliées au renfort fibreux de la portion centrale (16) par tissage.

2. Plateforme selon la revendication 1, **caractérisée en ce que** l'armure de tissage des premier et deuxième bords (18) est choisie parmi : toile, satin, sergé.

3. Plateforme selon l'une quelconque des revendications 1 et 2, **caractérisée en ce que** chaque bord (18) s'étend dans la direction transversale de la paroi de veine (10) depuis la portion centrale (16) sur une distance déterminée D telle qu'un rapport D/L est compris entre 2% et 10%, où L est la largeur de la paroi de veine dans la direction transversale de ladite paroi.

4. Plateforme selon l'une quelconque des revendications 1 à 3, **caractérisée en ce que** chaque bord (18) présente une épaisseur e telle qu'un rapport e/D est compris entre 5% et 50%, où D est la distance déterminée sur laquelle chaque bord s'étend dans la direction transversale de la paroi de veine (10) depuis la portion centrale (16).

5. Plateforme selon l'une quelconque des revendications 1 à 4, **caractérisée en ce qu'**elle comprend une paroi de fond (12) destinée à reposer sur un disque de soufflante (3) et deux parois latérales (14) s'étendant entre la paroi de fond et la paroi de veine (10) de ladite plateforme.

6. Plateforme selon l'une quelconque des revendications 1 à 5, **caractérisée en ce qu'**elle est en matériau composite et comprend un renfort fibreux densifié par une matrice, le renfort fibreux de la paroi de veine (10) constituant une partie du renfort fibreux de la plateforme.

7. Module de soufflante de turbomachine aéronautique comprenant au moins deux aubes (2) et au moins une plateforme (1) selon l'une quelconque des revendications 1 à 6 positionnée entre deux aubes voisines.

8. Turbomachine aéronautique comprenant un module de soufflante selon la revendication 7.

9. Procédé de fabrication d'une plateforme rapportée (1) selon l'une quelconque des revendications 1 à 6, le procédé comprenant les étapes suivantes :
- le tissage d'une préforme fibreuse destinée à former le renfort fibreux de la paroi de veine (10) de la plateforme, et
- la formation d'une matrice dans la porosité de ladite préforme fibreuse.

## Patentansprüche

1. Angesetzte Plattform (1), die dazu bestimmt ist, zwischen zwei benachbarten Schaufeln (2) eines Gebläses einer Luftfahrtturbomaschine angeordnet zu werden, wobei die Plattform eine Kanalwand (10) aus Verbundwerkstoff mit einem mittleren Abschnitt (16) sowie einen ersten und einen zweiten Rand (18), die sich in einer Längsrichtung der Wand erstrecken, umfasst, wobei sich jeder Rand über eine bestimmte Strecke (D) von dem mittleren Abschnitt (16) aus in einer Querrichtung der Wand erstreckt, wobei die Kanalwand eine durch eine Matrix verdichtete Faserverstärkung umfasst, **dadurch gekennzeichnet, dass** die in dem mittleren Abschnitt (16) vorhandene Faserverstärkung ein dreidimensionales Gewebe aufweist und dass die in jedem der ersten und zweiten Ränder (18) vorhandene Faserverstärkung wenigstens einen ersten Gewebestreifen in einem ersten Abschnitt (20), der ein zweidimensionales Gewebe aufweist, einen zweiten Gewebestreifen in einem zweiten Abschnitt (22), der ein zweidimensionales Gewebe aufweist, sowie einen dritten Gewebestreifen in einem dritten Abschnitt (24), der ein dreidimensionales Gewebe aufweist, umfasst, wobei die Streifen alle mit der Faserverstärkung des mittleren Abschnitts (16) verwoben sind.

2. Plattform nach Anspruch 1, **dadurch gekennzeichnet, dass** die Webbindung des ersten und des zweiten Randes (18) ausgewählt ist aus: Leinwand, Satin, Köper.

3. Plattform nach einem der Ansprüche 1 und 2, **dadurch gekennzeichnet, dass** sich jeder Rand (18) in der Querrichtung der Kanalwand (10) vom mittleren Abschnitt (16) aus über eine bestimmten Strecke D erstreckt, derart, dass ein Verhältnis D/L zwischen 2 % und 10 % liegt, wobei L die Breite der Kanalwand in der Querrichtung der Wand ist.

4. Plattform nach einem der Ansprüche 1 bis 3, **dadurch gekennzeichnet, dass** jeder Rand (18) eine Dicke e aufweist, die derart ist, dass ein Verhältnis e/D zwischen 5 % und 50 % liegt, wobei D die bestimmte Strecke ist, über die sich jeder Rand in der Querrichtung der Kanalwand (10) vom mittleren Abschnitt (16) aus erstreckt.

5. Plattform nach einem der Ansprüche 1 bis 4, **dadurch gekennzeichnet, dass** sie eine Bodenwand (12), die dazu bestimmt ist, auf einer Gebläsescheibe (3) zu ruhen, sowie zwei Seitenwände (14) umfasst, die sich zwischen der Bodenwand und der Kanalwand (10) der Plattform erstrecken.

6. Plattform nach einem der Ansprüche 1 bis 5, **dadurch gekennzeichnet, dass** sie aus Verbundwerkstoff besteht und eine durch eine Matrix verdichtete Faserverstärkung umfasst, wobei die Faserverstärkung der Kanalwand (10) einen Teil der Faserverstärkung der Plattform bildet.

7. Gebläsemodul einer Luftfahrtturbomaschine, umfassend wenigstens zwei Schaufeln (2) und wenigstens einer Plattform (1) nach einem der Ansprüche 1 bis 6, die zwischen zwei benachbarten Schaufeln angeordnet ist.

8. Luftfahrtturbomaschine, die ein Gebläsemodul nach Anspruch 7 umfasst.

9. Verfahren zur Herstellung einer angesetzten Plattform (1) nach einem der Ansprüche 1 bis 6, wobei das Verfahren die folgenden Schritte umfasst:
- das Weben eines Faservorformlings, der dazu bestimmt ist, die Faserverstärkung der Kanalwand (10) der Plattform zu bilden, und
- das Ausbilden einer Matrix in der Porosität des Faservorformlings.

## Claims

1. A fitted platform (1) for positioning between two adjacent blades (2) of an aviation turbine engine fan, said platform comprising a flow passage wall (10) made of composite material having a central portion (16) and first and second margins (18) each extending in a longitudinal direction of said wall, each margin extending over a determined distance (D) from the central portion (16) in a transverse direction of said wall, said flow passage wall comprising fiber reinforcement densified by a matrix, the platform being **characterized in that** the fiber reinforcement present in the central portion (16) presents three-dimensional weaving, and **in that** the fiber reinforcement present in each of the first and second margins (18) comprises at least a first fabric strip in a first portion (20) presenting a two-dimensional weaving, a second fabric strip in a second portion (22) presenting a two-dimensional weaving, and a third fabric strip in a third portion (24) presenting a three-dimensional weaving, said fabric strips being all connected to the fiber reinforcement of the central portion (16) by weaving.

2. A platform according to claim 1, **characterized in that** the weave in the first and second margins (18) is selected from: plain, satin, serge.

3. A platform according to claim 1 or claim 2, **characterized in that** each margin (18) extends in the transverse direction of the flow passage wall (10) from the central portion (16) over a determined distance D such that a ratio D/L lies in the range 2% to 10%, where L is the width of the flow passage wall in the transverse direction of said wall.

4. A platform according to any one of claims 1 to 3, **characterized in that** each margin (18) presents a thickness e such that a ratio e/D lies in the range 5% to 50%, where D is the determined distance over which each margin extends in the transverse direction of the flow passage wall (10) from the central portion (16).

5. A platform according to any one of claims 1 to 4, **characterized in that** it has a bottom wall (12) for resting on a fan disk (3) and two side walls (14) extending between the bottom wall and the flow passage wall (10) of said platform.

6. A platform according to any one of claims 1 to 5, **characterized in that** it is made of composite material and comprises fiber reinforcement densified by a matrix, the fiber reinforcement of the flow passage wall (10) constituting a portion of the fiber reinforcement of the platform.

7. An aeroengine turbine engine fan module comprising at least two blades (2) and at least one platform (1) according to any one of claims 1 to 6 positioned between two adjacent blades.

8. An aviation turbine engine including a fan module according to claim 7.

9. A method of fabricating a fitted platform (1) according to any one of claims 1 to 6, the method comprising the following steps:
• weaving a fiber preform to form the fiber reinforcement of the flow passage wall (10) of the platform; and
• forming a matrix in the pores of said fiber preform.
